# EUROPÄISCHE PATENTSCHRIFT

(11) **EP 1 786 927 B1**
(45) Veröffentlichungstag und Bekanntmachung des Hinweises auf die Patenterteilung: **07.01.2009**
(21) Anmeldenummer: 05774381.7
(22) Anmeldetag: 12.08.2005
(51) Int. Cl.: C12Q 1/68, G01N 27/333

(54) **VORRICHTUNG UND VERFAHREN ZUM NACHWEIS VON GELADENEN MAKROMOLEKÜLEN**
DEVICE AND METHOD FOR THE DETECTION OF CHARGED MACROMOLECULES
DISPOSITIF ET PROCEDE DE DETECTION DE MACROMOLECULES CHARGEES

(30) Priorität: 10.09.2004 DE 102004044299
(43) Veröffentlichungstag der Anmeldung: 23.05.2007
(73) Patentinhaber: Forschungszentrum Jülich GmbH, 52425 Jülich (DE)
(72) Erfinder: POGHOSSIAN, Arshak, 40479 Düsseldorf (DE); CHERSTVY, Andrey, 01187 Dresden (DE); SCHÖNING, Michael, Josef, 52428 Jülich (DE); INGEBRANDT, Sven, 52457 Aldenhoven (DE); KEUSGEN, Michael, 53359 Rheinbach (DE)
(86) Internationale Anmeldenummer: PCT/DE2005/001423
(87) Internationale Veröffentlichungsnummer: WO 2006/026946

(56) Entgegenhaltungen:
- WO-A-99/51330
- US-A1- 2004 035 699
- POGHOSSIAN A ET AL: "Possibilities and limitations of label-free detection of DNA hybridization with field-effect-based devices" SENS ACTUATORS, B CHEM; SENSORS AND ACTUATORS, B: CHEMICAL NOV 11 2005, Bd. 111-112, Nr. SUPPL., 30. April 2005 (2005-04-30), Seiten 470-480, XP002355261

## Beschreibung

Die Erfindung betrifft eine Vorrichtung und ein Verfahren zum Nachweis von geladenen Makromolekülen. Eine derartige Vorrichtung ist aus WO 99/51330 A bekannt.

DNA-Mikroarrays, auch DNA-Chips genannt, sind für den Einsatz in der Gen und Medizintechnik vor dem Hintergrund einer parallelen Analyse von Nukleinsäuren-Sequenzen bedeutsam.

DNA-Chips bestehen typischerweise aus einem Glas- oder Siliziumsubstrat mit einem Array von Mikrospots für das eigentliche Bindungs- oder Hybridisierungsexperiment. Dabei hybridisieren zwei komplementäre Einzelstränge (ssDNA) zu einem doppelsträngigen Molekül (dsDNA). Jeder Mikrospot weist einzelsträngig vorliegende DNA-Proben auf, die mit komplementären Target-Molekülen aus einer zu untersuchenden Analytlösung binden bzw. hybridisieren. Die DNA-Hybridisierung ist hochselektiv. Es können nur komplementäre Sequenzen der DNA effizient miteinander hybridisieren. DNA-Chips ermöglichen den simultanen Nachweis von verschiedensten Target-Molekülen oder DNA-Fragmenten. Der Nachweis ist auch in komplexen Lösungsgemischen möglich.

Aus DE 10048997 A1 ist eine feldeffektbasierende kapazitive Vorrichtung zum Nachweis geladener Makromoleküle, insbesondere von Polynukleotidsequenzen, in einer elektrisch leitfähigen Lösung bekannt. Das angegebene Verfahren beruht darauf, dass viele Makromoleküle in Lösung in dissoziierter Form vorliegen und teilweise eine hohe Ladung tragen. Beim Nachweis der in der Probelösung dissoziierten Target-Makromoleküle mit an einer Gate-Isolatoroberfläche fixierten DNA-Probe kann eine Anreicherung von Ladungen an der Isolatoroberfläche stattfinden. Diese Anreicherung führt zu einer Verschiebung von Ladungsträgern im Halbleiter bzw. zu einer Verschiebung der C/V-Kennlinie (Kapazität/Spannung) und damit zu einer Veränderung der Kapazität des aus dem System Halbleiter/Isolator/Probelösung/Metall (als Referenzelektrode) bestehenden Kondensators, welche erfasst werden kann.

Aus US 2003/0152929 A1 ist zur Bestimmung unbekannter DNA ein Floating-gate-Feldeffekttransistor bekannt. Die Anordnung beinhaltet unterschiedliche Detektionsspots, wobei jeder aus einem Poly-Si Floating-gate-Feldeffekttransistor besteht. Bei einem Hybridisierungsereignis zwischen der bekannten DNA-Probe auf dem Gate des Transistors und der unbekannten, zu untersuchenden Target-DNA in der Analytlösung, erhöht sich die negative Ladung auf dem Gate des Transistors. Dies hat eine nachweisbare Änderung des Drainstroms zur Folge.

Aus US 6482639 B2 ist ein Sensor auf Basis eines Verarmungstyp-FET zur markierungsfreien, quantitativen Detektion von ungeladenen und geladenen Target-Molekülen bekannt. Dabei fließt bereits bei einer Gatespannung von 0 V ein Drainstrom. Die DNA-Probe wird auf einer Au-Floating-gate-Elektrode immobilisiert, die wiederum auf einem SiO₂-Si₃N₄ Gateisolator angeordnet ist. Der Sensor reagiert auf das Hybridisierungsereignis mit einer Änderung des Drainstromes des FET.

Eine Stromänderung wird durch eine Verdrängung des Elektrolyts auf Grund der Bindung zwischen Target-DNA und DNA-Probe induziert. Dies führt zu einer Änderung in der effektiven Schichtdicke des Gateisolators und damit zu einer Änderung der Kapazität. Die Stromänderung wird auch durch die Anreicherung von.geladenen Molekülen auf dem Gate induziert, wodurch es zu einer Änderung in der Schwellspannung des Transistors kommt.

Nachteilig wurden mit den oben beschriebenen feldeffektbasierten Sensoren nur geringe Signalamplituden erreicht, da ein sogenannter Counter-ion-screening-Effekt auftritt, bei dem die negative Ladung der DNA in Lösung durch positiv geladene Gegenionen abgeschirmt wird. Weitere Defizite sind die hohe Drift der Sensoren, die Instabilität und die schlechte Reproduzierbarkeit der Sensorbauelemente, verursacht durch z. B. floating Gate, fehlende bzw. unzureichend realisierte Referenzelektrode und extrem dünne Gateisolatormaterialien.

Das Prinzip der vorgestellten feldeffektbasierten Sensoren setzt voraus, dass während des Hybridisierungsereignisses die Ladung des Target-Moleküls die Ladung im Gatebereich des Sensors ändert. Eine gleich große aber entgegengesetzte Ladungsänderung wird im Halbleiter induziert, was sich in einer Änderung des Operationsverhaltens des Bauelementes bemerkbar macht (Änderung der Kapazität, Flachbandspannung, Schwellspannung, Leitfähigkeit im Kanal, Strom). Tatsächlich können aber die elektrische Ladung von immobilisierten Proben- bzw. Target-Moleküle durch kleine Gegenionen in der Analytlösung mehr oder weniger vollständig abgeschirmt bzw. neutralisiert werden. Dies wiederum maskiert bzw. reduziert das in dem DNA-Hybridisierungsexperiment mögliche Messsignal. Im ungünstigsten Falle resultiert somit eine Nettoladung gleich Null, das heißt der sich unterhalb der DNA-Schicht befindliche Feldeffektsensor kann trotz des Hybridisierungsereignisses kein Messsignal empfangen. Deshalb ist eine direkte Messung von Ladungen der geladenen Makromoleküle in Lösungen mit hohen Ionenkonzentrationen, z. B. in physiologischen Lösungen, mittels den aus dem Stand der Technik vorgestellten feldeffektbasierten Sensoren ineffizient.

Um die Counter-ion-screening-Effekte zu reduzieren und ein ausreichend hohes Messsignal zu erzielen, muss mit den vorgestellten Sensoren in Analytlösungen mit niedriger Ionenkonzentration von wenigen milimol (mM) gearbeitet werden. Nachteilig sind in diesem Fall dann allerdings eine reduzierte Hybridisierungswahrscheinlichkeit sowie eine längere Hybridisierungsdauer.

Weiterhin nachteilig ist, dass eine Oberflächen-Interaktion während des Hybridisierungsereignisses nur zwischen immobilisierten DNA-Probenmolekülen und ihren komplementären Target-Molekülen stattfinden soll. Es darf keine Interaktionen zwischen kleinen Ionen in der Analytlösung und der Gateoberfläche auftreten. Um dies zu erreichen, muss die immobilisierte DNA-Probe als dichte und geschlossene Monoschicht ohne Poren und Löcher gebildet werden, was faktisch nicht realisierbar ist. Ein Eindringen kleiner anorganischer Ionen und Wassermoleküle zur Gateschicht ist nachteilig möglich. Weil diese Gateschichten üblicherweise in Form von SiO₂ silanisiertem SiO₂, Si₃N₄, Au oder ähnlichen Materialien elektroaktive oder chemosensitive Eigenschaften, z. B. pH-, Ionen- und/oder Redoxsensitivität, aufweisen können, kann die Wechselwirkung zwischen kleinen Ionen aus der Analytlösung und Gateoberfläche zur Maskierung, Reduzierung und sogar Verfälschung des von nachzuweisenden Makromolekülen induzierten Signals führen. Diese Phänomene sowie mögliche Ladungsumverteilungseffekte (durch "Counter-ion-screening"-Effekte verursacht) am Interface zwischen Gateschicht und Analytlösung werden bei den oben beschriebenen Arbeiten nicht berücksichtigt.

Aufgabe der Erfindung ist es daher, eine Vorrichtung und ein Verfahren zum markierungsfreien Nachweis geladener Makromoleküle bereit zu stellen, welches die im Stand der Technik aufgezeigten Mängel nicht aufweist.

Die Aufgabe wird durch eine Vorrichtung gemäß Hauptanspruch und durch ein Verfahren gemäß Nebenanspruch gelöst. Vorteilhafte Ausgestaltungen ergeben sich aus den darauf jeweils rückbezogenen Patentansprüchen.

Die Vorrichtung umfasst einen ionensensitiven Sensor, mit einer ionensensitiven Schicht. An der Oberfläche der ionensensitiven Schicht sind Probenmoleküle zum Nachweis von Targetmolekülen immobilisiert. Beide Molekültypen gehen unter geeigneten Bedingungen eine spezifische Bindung miteinander ein.

Erfindungsgemäß sind die Probenmoleküle auf der Oberfläche der ionensensitiven Schicht in einem Mindestabstand zueinander immobilisiert. Der Mindestabstand wird so bemessen, dass je nach Größe von Probenmolekül und Target-Molekül sowie nach den sterischen Gegebenheiten an der Oberfläche der ionensensitiven Schicht bei der Bindung der Moleküle eine Umverteilung von Ionen und damit eine Änderung der Ionenkonzentration in den intermolekularen Zwischenräumen induziert wird. Diese Änderung der Ionenkonzentration und/oder der Ionenempfindlichkeit der ionensensitiven Schicht dient als Grundlage für das Messsignal.

Auf der ionensensitiven Schicht sind die Probenmoleküle in einem Interprobe-Abstand voneinander immobilisiert. Diese binden mit den nachzuweisenden komplementären Target-Molekülen in der Analytlösung. Die Vorrichtung erfasst das Bindungsereignis mittels Detektion der Umverteilung von Ionen in den intermolekularen Zwischenräumen und/oder der Änderung der Ionenempfindlichkeit der ionensensitiven Schicht.

Es wurde im Rahmen der Erfindung erkannt, dass die Bindung auf der ionensensitiven Schicht zu einer Änderung im Potential am Interface von ionensensitiver Schicht zur Analytlösung in den intermolekularen Zwischenräumen der Probenmoleküle führt. Die Änderung der Leitfähigkeit bzw. der Impedanz der ionensensitiven Schicht wird von dem ionensensitiven Sensor erfasst.

Der ionensensitive Sensor wird als Transducer zum Nachweis der Bindung von geladenen Makromolekülen verwendet.

Die Vorrichtung ist insbesondere zum Nachweis einer Hybridisierung zwischen Nukleinsäuren geeignet. In diesem Fall, sind Probenmolekül und Target-Molekül zueinander komplementäre Nukleinsäuren, wie z. B. RNA oder DNA.

Es kann als Probenmolekül vorteilhaft mindestens eine Nukleinsäuresorte auf der ionensensitiven Schicht immobilisiert sein. Es können auch verschiedene Sorten Nukleinsäuren auf der Oberfläche immobilisiert sein. Die einzelsträngigen, immobilisierten ssDNA Nukleinsäuren hybridisieren mit ihren komplementären Nukleinsäuren zu doppelsträngiger dsDNA.

Durch die Immobilisierung der Probenmoleküle ist vorteilhaft gewährleistet, dass die Anzahl an ssDNA-Probenmolekülen, die für die Immobilisierung benötigt werden, reduziert werden kann, da für die Aufnahme des Messsignals keine dicht gepackte Schicht erforderlich ist. Dadurch lässt sich die Immobilisierungsdauer reduzieren. Der mittlere Abstand zwischen den einzelnen Probenmolekülen kann vorzugsweise im Bereich zwischen 2,5 nm und 11 nm liegen, was einer Moleküldichte von etwa 2,0x10¹³ Molekülen/cm² bis 1,0x10¹² Molekülen/cm² entspricht. Im Speziellen können die Werte auf Bereiche zwischen 3,5 nm und 6 nm eingegrenzt werden, was einer Probendichte von zwischen 1,0x10¹³ Molekülen/cm² und 3,5x10¹² Molekülen/cm² entspricht.

Die ionensensitive Schicht ermöglicht eine spezifische Wechselwirkung mit dem entsprechenden Ion (z. B. Natrium, Kalium) in der Analytlösung. Eine besonders vorteilhafte Eigenschaft der ionensensitiven Schicht beruht darauf, dass diese aktive Bindungsstellen für die reversible Wechselwirkung mit Ionen der Analytlösung aufweist, z. B. eine Ionenbindung, einen Ionenaustausch oder eine Ionenextraktion. Als ionensensitive Schicht können sowohl kationen- als auch anionenselektive Membranen verwendet werden.

Die ionensensitive Schicht kann z. B. eine Ionenaustauschermembran, neutrale Carriermembran, geladene Carriermembran, polymerbasierte Membran, Festkörpermembran oder Glasmembran umfassen. Darüber hinaus können auch Membranen, basierend auf der reversiblen Ionenkoextraktion, als ionenselektive Schichten fungieren. Es ist denkbar, die ionenselektive Schicht aus anorganischen Schichten aufzubauen, die mittels Ionenimplantation (z. B. SiO₂- oder Si₃N₄-Schicht, implantiert mit verschiedenen chemischen Elementen, wie B, Al, Ga, In, oder T1), Ionendiffusion (z. B. Diffusion von F⁻-Ionen in SiO₂) oder mit ionenkomplexierenden Molekülen modifiziert wurde. Abhängig von der zu untersuchenden Analytlösung, kann der Gateisolator eines Feldeffektsensors direkt als ionensensitive Schicht fungieren.

Die ionensensitive Schicht kann Bindungsplätze auf der Oberfläche zur Immobilisierung der Probenmoleküle und Oberflächengruppen für Interaktionen mit Ionen aus der Analytlösung aufweisen.

Weiterhin können dünne Polymerfilme mit wenig oberflächenaktiven Gruppen, wie z.B. Teflon, Parylene und Materialien, die empfindlich gegenüber einem so genannten mixed Interfacepotential reagieren, eingesetzt werden.

Die ionensensitive Schicht kann in einer weiteren Ausgestaltung der Erfindung auch aus einem Material bestehen, das einen pH_{pzc} (point of zero charge) besitzt, der größer als der pHₛ der Analytlösung ist, die für die Immobilisierung und/oder die Bindung benutzt wird. Für pH_{pzc}>pHₛ, ist die Oberfläche der ionensensitiven Schicht positiv geladen und ermöglicht so eine schnelle Immobilisierung und/oder Hybridisierung der negativ geladenen DNA-Moleküle.

Als ionensensitiver Sensor kann sowohl ein kationenals auch anionensensitiver Sensor verwendet werden. Der ionensensitive Sensor kann einen feldeffektbasierenden Halbleitersensor beinhalten, z. B. einen kapazitiven EIS- (electrolyte-insulator-semiconductor) oder EMIS-(electrolyte-membrane-insulator-semiconductor) Sensor, FET-Strukturen (field-effect-transistor) wie ISFET (ion-sensitive field-effect transistor) bzw. CHEMFET (chemically-sensitive field-effect transistor), Dünnfilm-Transistoren, organische FETs oder einen LAPS (light-addressable potentiometric sensor).

Für einen stabilen Funktionsbetrieb enthält die Vorrichtung vorzugsweise eine Referenzelektrode bzw. ein Referenzelement, z. B. aus Ag/AgCl. Die Referenzelektrode bzw. das Referenzelement kann vorteilhaft auf dem ionensensitiven Sensor integriert sein.

Alternativ können konduktometrische bzw. impedimetrische Transducerprinzipien verwenden werden. Solche Sensoren basieren auf ionenkonzentrationsabhängigen Veränderungen in der Leitfähigkeit oder Impedanz der ionensensitiven Schicht und benötigen kein Referenzelement. Ein konduktometrischer bzw. impedimetrischer ionensensitiver Sensor weist Interdigitalelektroden auf.

Das Bindungs- bzw. Hybridisierungsereignis zwischen Proben- und Target-Molekülen generiert ein elektrisches Signal in der Messanordnung, wobei die Signalamplitude mit dem Grad der Wechselwirkung zwischen Proben- und Target-Molekül korreliert. Als Messgröße wird die Kapazitäts- oder Spannungsänderung einer EIS- und/oder EMIS-Struktur, der Photostrom beim LAPS oder die Änderung der Kanalleitfähigkeit bzw. des Stroms oder der Gatespannung beim FET dienen. Alternativ können die hybridisierten Moleküle auf Grund einer Änderung der Leitfähigkeit bzw. Impedanz bei einem auf dem konduktometrischen und/oder impedimetrischen Transducerprinzip basierenden Sensor, erfasst werden.

Die Vorrichtung kann einen kationensensitiven und einen anionensensitiven Sensor umfassen. Hierdurch wird vorteilhaft bewirkt, dass die Empfindlichkeit der Vorrichtung erhöht wird.

Die erfindungsgemäße Vorrichtung ist zum markierungsfreien simultanen Nachweis der Hybridisierung verschiedener Target-Moleküle geeignet, sofern mehrere der vorab beschriebenen Vorrichtungen zu einem Array zusammengefasst werden. Mittels der Vorrichtung kann die Sequenz verschiedener Target-Moleküle bestimmt werden.

Die verwendeten Probenmoleküle können biologische oder synthetisch hergestellte Moleküle sein, die eine spezifische Affinität besitzen, um die Bindung, z. B. eine Hybridisierung mit den Target-Molekülen effizient durchführen zu können. Bevorzugt kommen hierfür ssDNA-Moleküle, Einzelstrang-RNA-Moleküle, Oligonukleotide und andere geladene Makromoleküle in Frage.

Die Probenmoleküle können direkt auf der ionensensitiven Schicht immobilisiert werden oder unter Zuhilfenahme von Primern. Die Immobilisierung kann z. B. mittels Adsorption, Biotin-Avidin-Komplexierung oder Linkermoleküle erfolgen. Die Probenmoleküle können auch direkt in der ionensensitiven Schicht synthetisiert vorliegen.

Als Target-Moleküle können ssDNA-Moleküle, Einzelstrang-RNA-Moleküle, Oligonukleotide und andere geladene Makromoleküle, die komplementär zu den jeweiligen Probenmolekülen sind, verwendet werden.

Um Störgrößen auszublenden, kann die Vorrichtung als Differenzanordnung angeordnet sein. Störgrößen sind Änderungen des pH-Wertes und/oder der Bulk-Ionenkonzentration im Analyten, der Temperatur, des Potentials der Referenzelektrode, und Effekte verursacht durch nichtspezifische Adsorption von Makromolekülen. Die Differenzanordnung weist einen zweiten ionensensitiven Sensor mit immobilisierten Probenmolekülen auf, welche sich nicht komplementär zu den nachzuweisenden Target-Molekülen verhalten. Die Amplitude des Differenzsignals zwischen beiden Sensoren dient als Messsignal für das Hybridisierungsereignis. Weiterhin ermöglicht die Differenzanordnung die Verringerung von Störgrößen im Sensorsignal, die durch nichtspezifische Adsorption von nicht-komplemetären Molekülen verursacht werden.

Zusätzlich kann ein Edelmetall als Pseudo-Referenzelektrode benutzt werden. Pt oder Au sind als Materialien für die Pseudoreferenz denkbar.

Die Vorrichtung gemäß der Erfindung kann einen Arrayaufbau aus mehreren ionensensitiven Sensoren umfassen, bei dem auf der ionensensitiven Schicht jedes ionensensitiven Sensors des Arrays ssDNA-Probenmoleküle bestimmter Sequenz immobilisiert sind, um die jeweiligen Target-Moleküle in komplexen Analytlösungen zu binden. Da die DNA-Hybridisierung hochselektiv ist, können nur komplementäre Sequenzen der DNA effizient miteinander hybridisieren. Dadurch kann die Sequenz der Nukleotid-Basen innerhalb des Target-DNA-Fragmentes bestimmt werden. Ein solches Array ermöglicht den simultanen Nachweis verschiedenster Target-Moleküle oder DNA-Fragmente selbst in komplexen Analytlösungen.

Das Verfahren zum Nachweis der Bindung geladener Makromoleküle sieht vor, dass eine durch die Bindung induzierte Umverteilung der Ionen in den intermolekularen Zwischenräumen nachgewiesen wird.

Diese dient zum Nachweis einer Hybridisierung zwischen Probenmolekülen und Target-Molekülen.

Vorteilhaft wird das Messsignal zunächst in einer Lösung ohne Target-Moleküle und danach in einer Lösung, die die nachzuweisenden Target-Moleküle enthält, erfasst, um die Kalibrierung durchzuführen.

Die Größe einer durch die Hybridisierung verursachten Änderung des Messsignals korreliert mit dem Grad der Wechselwirkung zwischen Target- und Probenmolekülen. Es wird auf diese Weise ein Differenzsignal generiert. Die Größe des resultierenden Differenzsignals korreliert direkt mit dem Grad der molekularen Interaktion. Das gemessene Sensorsignal kann eine Kapazität, ein Strom, ein Photostrom, eine Spannung, eine Leitfähigkeit oder eine Impedanz sein.

Das Verfahren wird vorzugsweise derartig ausgeführt, dass die Vorrichtung zur Bindung zwischen Probenmoleküle Target-Molekülen in die Analytlösung getaucht wird. Die Analytlösung weist hierzu eine beliebige Ionenstärke auf, vorzugsweise in einem Bereich zwischen 5 mM und 0,5 M.

Die Größe der durch die Bindung bzw. Hybridisierung verursachten Änderung des Messsignals korreliert mit dem Grad der Wechselwirkung zwischen Target- und Probenmolekül. Abhängig vom Typ des ionensensitiven Sensors kann das erzielte Messsignal eine Änderung, z. B. in der Kapazität, des Stroms, des Photostroms, der Spannung, der Leitfähigkeit oder der Impedanz sein. Das Hybridisierungsereignis kann in einer Analytlösung mit niedrigen bis hohen Ionenkonzentrationen von weniger als 1 mM bis mehr als 1 M, vorzugsweise im Bereich von 5 mM bis 0,5 M, durchgeführt werden.

Das Verfahren kann eine Differenzanordnung aus einem ionensensitiven Sensor mit immobilisierten Probenmolekülen, die zu den nachzuweisenden Target-Molekülen komplementär sind, und einem ionensensitiven Referenzsensor mit immobilisierten Probenmolekülen, die zu den nachzuweisenden Target-Molekülen nicht komplementär sind, umfassen. Der Sensor mit hybridisierten DNA-Molekülen weist ein Messsignal auf, das sich anders verhält als bei Sensoren, die kein Hybridisierungsereignis zur Folge gehabt haben. Das Verfahren basiert auf der Erfassung des durch die Hybridisierung verursachten Differenzsignals, wobei die Größe des resultierenden Differenzsignals direkt mit dem Grad der molekularen Interaktion korreliert.

Das Verfahren weist vorteilhaft eine erhöhte Empfindlichkeit auf und kann sowohl in Analytlösungen niedriger und hoher Ionenstärke eingesetzt werden. Weiterhin vorteilhaft ist, dass die ionensensitive Schicht keine dicht gepackte Monoschicht an Probenmolekülen (z. B. ssDNA) an der Oberfläche aufweisen muss. Sie funktioniert deshalb mit weniger dichten und/oder porösen Schichten immobilisierter Probenmoleküle und kann für eine kontinuierliche Messung der Bindung in der Realzeit-Analyse eingesetzt werden. Das Verfahren kann zum quantitativen und qualitativen Nachweis geladener Makromoleküle verwendet werden.

Im Weiteren wird die Erfindung an Hand eines Ausführungsbeispiels und der beigefügten Figur näher beschrieben.

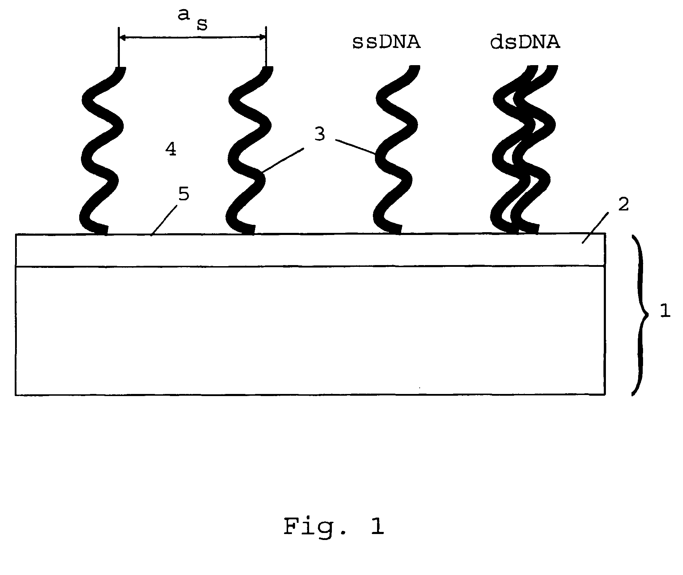

Es zeigt Fig. 1 schematisch einen Querschnitt durch die erfindungsgemäße Vorrichtung.

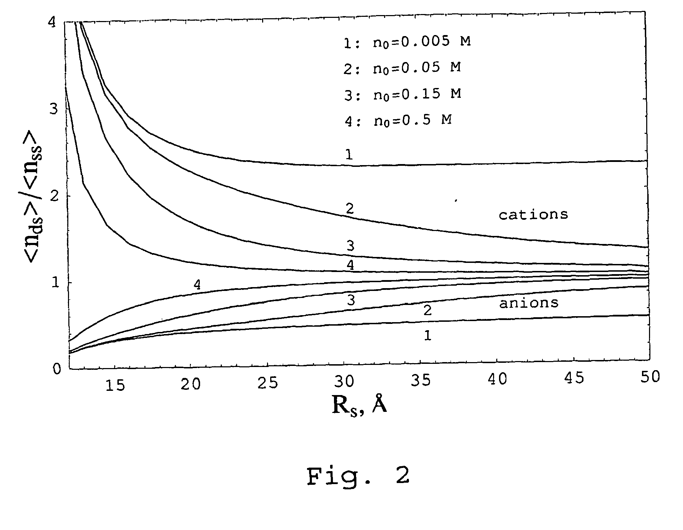

Fig. 2 zeigt ermittelte Kurven zum Verhältnis der mittleren Kationen- und Anionenkonzentration in den intermolekularen Zwischenräumen vor und nach der Hybridisierung.

Die Vorrichtung umfasst einen ionensensitiven Sensor 1 mit einer ionensensitiven Schicht 2 auf einem Substrat (Fig. 1). Die Oberfläche ist mit ssDNA-Probenmolekülen 3 belegt. Der Einfachheit halber sind die ssDNA-Moleküle als stäbchenförmige Moleküle, die senkrecht zur Oberfläche orientiert sind, dargestellt. Üblicherweise sind ssDNA-Moleküle sehr flexible Moleküle, deren Orientierung zur Oberfläche unter anderem von der Immobilisierungsmethode, der Länge der Moleküle und der Oberflächen-Ladung abhängt. Die Moleküle können senkrecht angeordnet, jedoch auch flach auf der Sensoroberfläche liegen, oder einen gewissen Winkel zur Oberfläche aufweisen. Nach der Hybridisierung verhalten sich kurze dsDNA-Fragmente eher stäbchenförmig als spulenförmig.

Auf der Sensoroberfläche sind die ssDNA-Probenmoleküle so arrangiert, dass sie mit einem mittleren Mitte-Mitte-Intermolekular-Abstand aₛ voneinander getrennt sind. Die Zwischenräume 4 zwischen den einzelnen ssDNA-Molekülen sind mit Analytlösung gefüllt, so dass die unbedeckte Oberfläche 5 der ionensensitiven Schicht 2 in unmittelbarem Kontakt mit der Analytlösung steht.

Die mittleren Abstände zwischen den einzelnen DNA-Strängen liegen im Bereich zwischen 2,5 nm und 11 nm, was einer Moleküldichte von etwa 2,0x10¹³ Molekülen/cm² bis 1,0x10¹² Molekülen/cm² entspricht.

Grundsätzlich erfasst der ionensensitive Sensor 1 die Änderung in der Zusammensetzung des Elektrolyten, das heißt die Konzentration oder Aktivität von Ionen mittels der Messung z. B. des Grenzflächenpotentials am Interface zwischen Analytlösung und ionensensitiver-Schicht 2 oder der Leitfähigkeit der ionensensitiven Schicht.

In Abwesenheit immobilisierter Probenmoleküle bildet sich zunächst eine elektrochemische Doppelschicht senkrecht zur Oberfläche der ionensensitiven Schicht aus (nicht dargestellt). Diese Situation ändert sich signifikant nach der Immobilisierung bzw. Hybridisierung von geladenen Makromolekülen. Da die ssDNA- und dsDNA-Moleküle in einem weiten pH-Bereich (pH 4 bis pH 11) negativ geladen sind, werden diese negativ geladenen Makromoleküle positiv geladene Gegenionen einschließlich Protonen anziehen, bzw. die Co-Ionen abstoßen. Als Resultat wird die DNA-Ladung von kleinen Gegenionen effektiv kompensiert oder neutralisiert. Dieser Vorgang wird als Gegenionen-Screening oder Gegenionen-Kondensationseffekt bezeichnet.

Dies führt zu einer lokalen Umverteilung der Ionen in den intermolekularen Zwischenräumen, das heißt zu einer Zunahme der Kationen- bzw. Abnahme der Anionenkonzentration, die von der Ionenkonzentration im Bulk-Elektrolyten abweicht.

Für Sensoranwendungen ist der Grad der durch eine Hybridisierung verursachten Änderung von der mittleren Ionenkonzentration in den intermolekularen Zwischenräumen von großem Interesse.

Fig. 2 zeigt das Verhältnis (<n_{ds}>/<nₛₛ>) der mittleren Kationen- and Anionenkonzentration in den intermolekularen Zwischenräumen nach <n_{ds}> und vor der Hybridisierung <nₛₛ> als Funktion des Mitte-Mitte-Intermolecular-Abstand aₛ zwischen den immobilisierten ssDNA-Probenmolekülen und in 1:1 Salzlösungen mit unterschiedlichen Bulk-Ionenkonzentrationen von n₀=0,005, 0,05, 0,15 (physiologische Lösung) und 0,5 M. Die Berechnungen wurden unter Zuhilfenahme eines elektrostatischen Modells des Gegenionen-Kondensationseffekts durchgeführt. Dabei bilden die ssDNA und dsDNA ein Gitter mit einheitlich negativ geladenen, unendlich langen Zylindern mit einem Radius r_{ssDNA}=0,5 nm bzw. r_{dsDNA}=1 Nanometer. Der Gitterradius ist gleich Rₛ=aₛ/2. Die Zylinder sind senkrecht zur Oberfläche orientiert mit einem Mitte-Mitte-Intermolekular-Abstand aₛ von ~2,5 nm bis zu etwa ~10 nm, was einer Dichte der ssDNA-Probenmoleküle von etwa 2, 0x10¹³ Molekülen/cm² bis zu 1,3x10¹² Molekülen/cm² entspricht. Der Anteil der ssDNA- und dsDNA-Ladungen, die von angelagerten, kondensierten Kationen kompensiert wird, beträgt θ=0,7, was in guter Näherung einer 1:1 Salzlösung entspricht.

Die mittlere Ionenkonzentration in den intermolekularen Zwischenräumen nach der Hybridisierung unterscheidet sich von derjenigen, vor der Hybridisierung so stark, dass ein genügendes Sensorsignal sogar in Lösungen mit hoher Ionenstärke (0,5 M) nachgewiesen werden kann. Bei hoher Ionenstärke ist die Hybridisierung schneller und die Hybridisierungseffizienz ist hoch. Die durch die DNA-Hybridisierung induzierte Umverteilung der Ionenkonzentration kann qualitativ und quantitativ erfasst werden. Bei einer hohen Dichte von immobilisierter ssDNA von ca. 2x10¹³ Molekülen/cm² (aₛ=2Rₛ~2,5 nm), und unter der Annahme von 100% Hybridisierungseffizienz, ist abhängig von der Ionenstärke in der Analytlösung, die mittlere Ionenkonzentration in den intermolekularen Zwischenräumen nach der Hybridisierung ca. 3-4 mal höher (Kationen) bzw. niedriger (Anionen) als vor der Hybridisierung. Wird ein ionensensitiver Sensor mit einer theoretischen Nernst-Empfindlichkeit von 59 mV/Dek. Für einwertige Ionen eingesetzt, dann führt die durch die Hybridisierung induzierte Ionenkonzentration-änderung zu einem Sensorsignal von etwa 28-35 mV. Mit einer Abnahme der Dichte der immobilisierten ssDNA-Moleküle, sinkt das Verhältnis <n_{ds}>/<nₛₛ>, um so mehr als dass die Ionenstärke zunimmt. Deshalb ist es für ein hohes Hybridisierungssignal bei niedriger Dichte der immobilisierten ssDNA erforderlich, Lösungen mit niedriger Ionenstärke zu verwenden. Grundsätzlich kann jedoch eine ca. 2-fache Erhöhung der Amplitude des Messsignals erzielt werden, wenn die kationen- und anionensensitiven Sensoren in einer Differenzverschaltung angebracht sind.

Ähnliche Ionen-Umverteilungseffekte treten auch auf, wenn die ssDNA-Moleküle flach oder mit einem gewissen Winkel auf der Oberfläche der ionensensitiven Schicht liegen, sogar falls diese Moleküle mit relativ kurzen Linkermolekülen auf der Oberfläche immobilisiert sind.

Aus diesen Gründen kann in der vorliegenden Erfindung, im Gegensatz zum Stand der Technik, der Abschirmungs- bzw. Kondensationseffekt der Gegenionen genutzt werden, um ein nützliches Signal zu erhalten. Darüber hinaus kann durch die Ausbildung einer zusätzlichen DNAinduzierten Doppelschicht, die parallel zur Sensoroberfläche vorliegt, die effektive Dicke der elektrochemischen Doppelschicht senkrecht zur Sensoroberfläche wachsen. Dies bedeutet, dass die Vorrichtung der vorliegenden Erfindung für die Detektion des Hybridisierungsereignisses sogar in Analytlösungen mit hoher Ionenstärke eingesetzt werden kann.

Zusätzlich zu dem Effekt der Umverteilung der Ionenkonzentration in den intermolekularen Zwischenräumen kann sich die Ionenempfindlichkeit der ionensensitiven Schicht durch die DNA-Hybridisierung induzierte Variation der Ionenbindungs- und/oder Ionenaustauschprozesse sowie effektiven Anzahl der aktiven Oberflächengruppen der ionensensitiven Schicht ändern. Wenn die immobilisierten ssDNA-Moleküle, z. B. bevorzugt flach auf der ionensensitiven Schicht liegen, können sie die Oberflächengruppen bedecken bzw. abschirmen oder den Potentialbildungsprozess für kleine Ionen verändern oder auch die Erreichung von potentialbestimmenden Ionen zur Oberfläche verhindern. Infolge dessen verändert sich die effektive Anzahl der Oberflächengruppen, die für eine Interaktion (Ionenbindung, Innenaustausch) mit kleinen Ionen zur Verfügung stehen und hiermit auch die Ionenempfindlichkeit der ionensensitiven Schicht. Im Gegensatz dazu können die während des Hybridisierungsereignisses gebildeten stäbchenförmigen dsDNA-Moleküle die aktiven Oberflächengruppen für Ionen-Interaktionen freigeben, was wieder in einer zusätzlichen Modulation der Ionenempfindlichkeit der ionensensitiven Schicht und zu einer Änderung des Sensorsignals führen kann. Darüber hinaus ist es damit z. B. auch möglich, zwischen match und mismatch der Interaktion zu unterscheiden.

Deshalb können beide Mechanismen die Umverteilung der Ionen in den intermolekularen Zwischenräumen sowie die Veränderung der Ionenempfindlichkeit der ionenselektiven Schicht zu einer Veränderung des Messsignals (z. B. elektrische Antwort) der Vorrichtung führen, deren Amplitude mit dem Grad der Wechselwirkung zwischen Target- und Probenmolekülen korreliert. Im Gegensatz zum Stand der Technik weist die Vorrichtung der vorliegende Erfindung eine erhöhte Empfindlichkeit auf, funktioniert sowohl in Lösungen mit niedriger als auch hoher Ionenkonzentration, erfordert keine dichtgepackte ssDNA-Monoschicht, kann Hybridisierungsereignisse kontinuierlich überwachen und kann für die Realzeitanalyse eingesetzt werden. Zusätzlich kann dadurch auch der Immobilisierungsprozess kontinuierlich überwacht werden.

Die Amplitude des Messsignals korreliert mit dem Grad der Wechselwirkung zwischen Target- und Probenmolekül. Die Messanordnung erfasst z. B. eine durch die Hybridisierung verursachte Änderung der Kapazität, des Stroms, des Photostroms, der Spannung, der Leitfähigkeit oder der Impedanz als Messgröße.

Es ist selbstverständlich denkbar, an Stelle von DNA andere Makromoleküle zu binden und nachzuweisen, z. B. RNA.

## Patentansprüche

1. Vorrichtung zum Nachweis von Makromolekülen, umfassend einen ionensensitiven Sensor (1,2) mit einer ionensensitiven Schicht (2), an deren Oberfläche Probenmoleküle (3) immobilisiert sind, welche mit nachzuweisenden Target-Molekülen eine spezifische Bindung einzugehen vermögen,
**dadurch gekennzeichnet, dass**
die Probenmoleküle derart in einem Mindestabstand aₛ voneinander auf der ionensensitiven Schicht immobilisiert angeordnet sind, dass während einer Bindung mit den Target-Molekülen eine Umverteilung der Ionen in den intermolekularen Zwischenräumen (4) der Probenmoleküle induziert wird.

2. Vorrichtung nach einem der vorhergehenden Ansprüche,
**dadurch gekennzeichnet, dass**
als Probenmolekül ein Molekül mindestens einer Nukleinsäuresorte auf der ionensensitiven Schicht immobilisiert angeordnet ist.

3. Vorrichtung nach einem der vorhergehenden Ansprüche,
**dadurch gekennzeichnet, dass**
die Probenmoleküle in einem Mitte-Mitte-Abstand voneinander zwischen 2,5 bis 11 Nanometer immobilisiert angeordnet sind.

4. Vorrichtung nach einem der vorhergehenden Ansprüche,
**dadurch gekennzeichnet, dass**
die ionensensitive Schicht eine Ionenaustauschermembran, eine Neutralcarriermembran, eine geladene Carriermembran, eine polymerbasierte Membran, eine auf der Ionenkoextraktion basierende Membran, eine Festkörpermembran und/oder eine Glasmembran umfasst.

5. Vorrichtung nach einem der vorhergehenden Ansprüche,
**dadurch gekennzeichnet, dass**
die ionensensitive Schicht eine anorganische Schicht umfasst, deren Oberfläche mittels Ionen-implantation, Ionenindiffusion oder ionenkomplexierenden Molekülen modifiziert ist.

6. Vorrichtung nach einem der vorhergehenden Ansprüche,
**dadurch gekennzeichnet, dass**
die ionensensitive Schicht Oberflächengruppen sowohl für Interaktion mit Ionen in einer Analytlösung als auch zur Immobilisierung der Probenmoleküle aufweist.

7. Vorrichtung nach einem der vorhergehenden Ansprüche,
**dadurch gekennzeichnet, dass**
die ionensensitive Schicht empfindlich gegenüber eines mixed-Interface-Potentials ist.

8. Vorrichtung nach einem der vorhergehenden Ansprüche,
**dadurch gekennzeichnet, dass**
die Probenmoleküle mittels Biotin-Avidin-Komplexierung auf der ionensensitiven Schicht immobilisiert angeordnet sind.

9. Vorrichtung nach einem der vorhergehenden Ansprüche,
**dadurch gekennzeichnet, dass**
die Probenmoleküle direkt auf der ionensensitiven Schicht synthetisch hergestellt sind.

10. Vorrichtung nach einem der vorhergehenden Ansprüche,
**dadurch gekennzeichnet, dass**
der ionensensitive Sensor ein halbleiterbasierter kapazitiver Feldeffektsensor (EIS, EMIS) ist.

11. Vorrichtung nach einem der vorhergehenden Ansprüche,
**dadurch gekennzeichnet, dass**
der ionensensitive Sensor ein halbleiterbasierter LAPS-Sensor ist.

12. Vorrichtung nach einem der vorhergehenden Ansprüche,
**dadurch gekennzeichnet, dass**
der ionensensitive Sensor ein halbleiterbasierter Feldeffekttransistor ist.

13. Vorrichtung nach einem der vorhergehenden Ansprüche,
**gekennzeichnet durch**
eine Referenzelektrode oder ein Referenzelement.

14. Vorrichtung nach einem der vorhergehenden Ansprüche,
**dadurch gekennzeichnet, dass**
die Referenzelektrode bzw. das Referenzelement auf dem ionensensitiven Sensor integriert ist.

15. Vorrichtung nach einem der vorhergehenden Ansprüche,
**dadurch gekennzeichnet, dass**
der Gateisolator eine ionensensitive Schicht bildet.

16. Vorrichtung nach einem der vorhergehenden Ansprüche,
**dadurch gekennzeichnet, dass**
der ionensensitive Sensor ein konduktometrischer oder impedimetrischer Sensor ist.

17. Vorrichtung nach einem der vorhergehenden Ansprüche,
**dadurch gekennzeichnet, dass**
die Vorrichtung einen zweiten ionensensitiven Sensor mit immobilisierten Probenmolekülen aufweist, die nicht komplementär zu den nachzuweisenden Target-Molekülen sind.

18. Vorrichtung nach einem der vorhergehenden Ansprüche,
**gekennzeichnet durch**
einen kationen- und einen anionensensitiven Sensor.

19. Vorrichtung nach einem der vorhergehenden Ansprüche,
**gekennzeichnet durch**
ein Edelmetall als Pseudoreferenzelektrode.

20. Vorrichtung nach einem der vorhergehenden Ansprüche,
**dadurch gekennzeichnet, dass**
diese eine Messelektronik zur Erfassung des Sensorsignals umfasst.

21. Vorrichtung nach einem der vorhergehenden Ansprüche,
**dadurch gekennzeichnet, dass**
diese eine Differenzanordnung umfasst.

22. Vorrichtung nach einem der vorhergehenden Ansprüche,
mit einem Array von Vorrichtungen nach einem der Ansprüche 1 bis 21.

23. Verfahren zum Nachweis der Bindung geladener Makromoleküle mit einer Vorrichtung nach einem der vorhergehenden Ansprüche 1 bis 22.

24. Verfahren nach Anspruch 23,
mit einer durch eine Bindung induzierten Umverteilung der Ionen in den intermolekularen Zwischenräumen.

25. Verfahren nach vorhergehendem Anspruch 23 oder 24,
**dadurch gekennzeichnet, dass**
das Messsignal zunächst in einer Lösung ohne Target-Moleküle und danach in einer Lösung, die die nachzuweisenden Target-Moleküle enthält, erfasst wird.

26. Verfahren nach einem der vorhergehenden Ansprüche 23 bis 25,
**dadurch gekennzeichnet, dass**
für die Bindung die Vorrichtung in eine Analytlösung mit einer beliebigen Ionenstärke, vorzugsweise im Bereich zwischen 5 mM und 0,5 M getaucht wird.

27. Verfahren nach einem der vorhergehenden Ansprüche 23 bis 26,
**dadurch gekennzeichnet, dass**
die Bindung von Probenmolekül und Target-Molekül zu einem nachweisbaren Messsignal führt, welches mit dem Grad der Bindung korreliert.

## Claims

1. Device for detecting macro-molecules, comprising an ion sensitive sensor (1, 2) with an ion sensitive layer (2), on the surface of which sample molecules (3) are immobilised, which can enter into a specific binding with the target molecules to be detected, **characterised in that** the immobilised sample molecules are arranged at a minimum distance as from each other on the ion sensitive layer in such a way that a re-distribution of the ions in the intermolecular gaps (4) of the sample molecule is induced during a binding with the target molecules.

2. Device according to one of the preceding Claims, **characterised in that** an immobilised molecule of at least one nucleic acid type is arranged on the ion sensitive layer as a sample molecule.

3. Device according to one of the preceding Claims, **characterised in that** the immobilised sample molecules are arranged at a centre to centre distance of between 2.5 and 11 nanometres from each other.

4. Device according to one of the preceding Claims, **characterised in that** the ion sensitive layer comprises an ion exchanger membrane, a neutral carrier membrane, a charged carrier membrane, a polymer based membrane, a membrane based on ion co-extraction, a solids membrane and/or a glass membrane.

5. Device according to one of the preceding Claims, **characterised in that** the ion sensitive layer comprises an anorganic layer, the surface of which is modified by means of ion implantation, ion diffusion or ion complexing molecules.

6. Device according to one of the preceding Claims, **characterised in that** the ion sensitive layer comprises surface groups for an interaction with ions in an analyte solution as well as for the immobilisation of the sample molecules.

7. Device according to one of the preceding Claims, **characterised in that** the ion sensitive layer is sensitive to a mixed interface potential.

8. Device according to one of the preceding Claims, **characterised in that** the immobilised sample molecules are arranged on the ion sensitive layer by means of biotin/avidin complexing.

9. Device according to one of the preceding Claims, **characterised in that** the sample molecules are synthetically produced directly on the ion sensitive layer.

10. Device according to one of the preceding Claims, **characterised in that** the ion sensitive sensor is a semi-conductor based capacitative field effect sensor (EIS, EMIS).

11. Device according to one of the preceding Claims, **characterised in that** the ion sensitive sensor is a semi-conductor based LAPS sensor.

12. Device according to one of the preceding Claims, **characterised in that** the ion sensitive sensor is a semi-conductor based field effect transistor.

13. Device according to one of the preceding Claims, **characterised by** a reference electrode or a reference element.

14. Device according to one of the preceding Claims, **characterised in that** the reference electrode or the reference element is integrated into an ion sensitive sensor.

15. Device according to one of the preceding Claims, **characterised in that** the gate isolator forms an ion sensitive layer.

16. Device according to one of the preceding Claims, **characterised in that** the ion sensitive sensor is a conductometric or an impedimetric sensor.

17. Device according to one of the preceding Claims, **characterised in that** the device comprises a second ion sensitive sensor with immobilised sample molecules that do not complement the target molecules to be detected.

18. Device according to one of the preceding Claims, **characterised by** a cation and an anion sensitive sensor.

19. Device according to one of the preceding Claims, **characterised by** a precious metal as the pseudo reference electrode.

20. Device according to one of the preceding Claims, **characterised in that** the same comprises measuring electronics for detecting the sensor signal.

21. Device according to one of the preceding Claims, **characterised in that** the same comprises a difference arrangement.

22. Device according to one of the preceding Claims, with an array of devices according to one of the Claims 1 to 21.

23. Method for detecting the binding of charged molecules with a device according to one of the preceding Claims 1 to 22.

24. Method according to Claim 23, with a re-distribution of the ions in the intermolecular gaps induced by a binding.

25. Method according to the preceding Claim 23 or 24, **characterised in that** the measurement signal is initially recorded in a solution without target molecules, and then in a solution containing the target molecules to be detected.

26. Method according to one of the preceding Claims 23 to 25, **characterised in that** the device is submerged in an analyte solution with a random ion density, preferably within a range of between 5 mM and 0.5 M, for the binding.

27. Method according to one of the preceding Claims 23 to 26, **characterised in that** the binding of sample molecules and target molecules results in a detectable measurement signal that correlates with the degree of the binding.

## Revendications

1. Dispositif pour la détection de macromolécules, comprenant un capteur sensible aux ions (1, 2) avec une couche sensible aux ions (2), sur la surface de laquelle sont immobilisées des molécules échantillons (3), qui peuvent former une liaison spécifique avec des molécules cibles à détecter,
**caractérisé en ce que**
les molécules échantillons sont disposées, immobilisées, à une distance minimale aₛ l'une de l'autre sur la couche sensible aux ions de manière à induire une redistribution des ions dans les interstices intermoléculaires (4) des molécules échantillons pendant une liaison avec les molécules cibles.

2. Dispositif selon l'une quelconque des revendications précédentes,
**caractérisé en ce que**
une molécule d'au moins une sorte d'acide nucléique est disposée, à titre de molécule échantillon, immobilisée sur la couche sensible aux ions.

3. Dispositif selon l'une quelconque des revendications précédentes,
**caractérisé en ce que**
les molécules échantillons sont disposées, immobilisées, à une mi-distance l'une de l'autre située entre 2,5 et 11 nanomètres.

4. Dispositif selon l'une quelconque des revendications précédentes,
**caractérisé en ce que**
la couche sensible aux ions comprend une membrane échangeuse d'ions, une membrane à support neutre, une membrane à support chargé, une membrane à base de polymère, une membrane à base de co-extraction ionique, une membrane à corps solides et / ou une membrane de verre.

5. Dispositif selon l'une quelconque des revendications précédentes,
**caractérisé en ce que**
la couche sensible aux ions comprend une couche inorganique, dont la surface est modifiée au moyen d'une implantation ionique, d'une pénétration ionique ou de molécules complexant les ions.

6. Dispositif selon l'une quelconque des revendications précédentes,
**caractérisé en ce que**
la couche sensible aux ions présente des groupes de surface aussi bien pour l'interaction avec des ions dans une solution d'analytes que pour l'immobilisation des molécules échantillons.

7. Dispositif selon l'une quelconque des revendications précédentes,
**caractérisé en ce que**
la couche sensible aux ions est sensible au potentiel d'une interface mixte.

8. Dispositif selon l'une quelconque des revendications précédentes,
**caractérisé en ce que**
les molécules échantillons sont disposées, immobilisées, sur la couche sensible aux ions au moyen d'une complexification biotine - avidine.

9. Dispositif selon l'une quelconque des revendications précédentes,
**caractérisé en ce que**
les molécules échantillons sont produites directement par synthèse sur la couche sensible aux ions.

10. Dispositif selon l'une quelconque des revendications précédentes,
**caractérisé en ce que**
le capteur sensible aux ions est un capteur à effet de champ capacitif à base de semi-conducteur (EIS, EMIS).

11. Dispositif selon l'une quelconque des revendications précédentes,
**caractérisé en ce que**
le capteur sensible aux ions est un capteur LAPS à base de semi-conducteur.

12. Dispositif selon l'une quelconque des revendications précédentes,
**caractérisé en ce que**
le capteur sensible aux ions est un transistor à effet de champ à base de semi-conducteur.

13. Dispositif selon l'une quelconque des revendications précédentes,
**caractérisé par**
une électrode de référence ou un élément de référence.

14. Dispositif selon l'une quelconque des revendications précédentes,
**caractérisé en ce que**
l'électrode de référence ou l'élément de référence est intégré sur le capteur sensible aux ions.

15. Dispositif selon l'une quelconque des revendications précédentes,
**caractérisé en ce que**
l'isolant de grille forme une couche sensible aux ions.

16. Dispositif selon l'une quelconque des revendications précédentes,
**caractérisé en ce que**
le capteur sensible aux ions est un capteur conductimétrique ou impédimétrique.

17. Dispositif selon l'une quelconque des revendications précédentes,
**caractérisé en ce que**
le dispositif comprend un deuxième capteur sensible aux ions avec des molécules échantillons immobilisées, qui ne sont pas complémentaires des molécules cibles à détecter.

18. Dispositif selon l'une quelconque des revendications précédentes,
**caractérisé par**
un capteur sensible aux cations et aux anions.

19. Dispositif selon l'une quelconque des revendications précédentes,
**caractérisé par**
un métal précieux à titre de pseudo-électrode de référence.

20. Dispositif selon l'une quelconque des revendications précédentes,
**caractérisé en ce que**
celui-ci comprend un système électronique de mesure pour capter le signal du capteur.

21. Dispositif selon l'une quelconque des revendications précédentes,
**caractérisé en ce que**
celui-ci comprend un dispositif différentiel.

22. Dispositif selon l'une quelconque des revendications précédentes, avec un réseau de dispositifs selon l'une des revendications 1 à 21.

23. Procédé pour la détection de la liaison de macromolécules chargées avec un dispositif selon l'une quelconque des revendications précédentes 1 à 22.

24. Procédé selon la revendication 23,
avec une redistribution des ions induite par une liaison dans les interstices intermoléculaires.

25. Procédé selon la revendication précédente 23 ou 24,
**caractérisé en ce que**
le signal de mesure est d'abord capté dans une solution sans molécules cibles et ensuite dans une solution contenant les molécules cibles à détecter.

26. Procédé selon l'une quelconque des revendications précédentes 23 à 25,
**caractérisé en ce que**
pour la liaison, le dispositif est plongé dans une solution d'analytes avec une force ionique quelconque, de préférence dans la plage située entre 5 mM et 0,5 M.

27. Procédé selon l'une quelconque des revendications précédentes 23 à 26,
**caractérisé en ce que**
la liaison de la molécule échantillon et de la molécule cible donne un signal de mesure détectable, qui est corrélé avec le degré de la liaison.
